# EUROPÄISCHE PATENTSCHRIFT

(11) **EP 3 012 138 B1**
(45) Veröffentlichungstag und Bekanntmachung des Hinweises auf die Patenterteilung: **11.12.2019**
(21) Anmeldenummer: 15189973.9
(22) Anmeldetag: 15.10.2015
(51) Int. Cl.: B60J 7/08

(54) **PLANENABDECKVORRICHTUNG SOWIE EIN DAMIT AUSGESTATTETER BEHÄLTER MIT EINER OBEREN BELADEÖFFNUNG**
TARPAULIN COVERING DEVICE AND A CONTAINER HAVING SAME WITH AN UPPER LOADING OPENING
DISPOSITIF DE BACHE ET RECIPIENT EN ETANT EQUIPE PRESENTANT UNE OUVERTURE DE CHARGEMENT SUPERIEURE

(30) Priorität: 21.10.2014 DE 102014221384
(43) Veröffentlichungstag der Anmeldung: 27.04.2016
(73) Patentinhaber: Franz Xaver Meiller Fahrzeug- und Maschinenfabrik-GmbH & Co KG, 80997 München (DE)
(72) Erfinder: POPP, Klaus, 82346 Andechs-Machtlfing (DE)
(74) Vertreter: Tiesmeyer, Johannes

(56) Entgegenhaltungen:
- US-A- 4 505 512
- US-A1- 2004 000 798
- US-B1- 6 478 361

## Beschreibung

Die vorliegende Erfindung betrifft einen Behälter mit einer oberen Beladeöffnung und einer Planenabdeckvorrichtung, die eine Plane, einen länglichen Wickelkern und eine Planenspannvorrichtung aufweist, wobei die Plane:
- einerseits an einer ersten Seite des Behälters - und andererseits an dem Wickelkern fixiert ist,
- in einer die Beladeöffnung freigebenden Öffnungsstellung als Wickel auf dem Wickelkern aufgewickelt an der ersten Seite des Behälters gelagert ist,
- durch Rollen des Wickelkerns von der ersten Behälterseite zu einer der ersten Behälterseite gegenüberliegenden zweiten Behälterseite von dem Wickelkern abwickelbar und dabei über die Beladeöffnung ausbreitbar ist und
- mittels der Planenspannvorrichtung in einer die Beladeöffnung abdeckenden Schließstellung spannbar ist,
wobei die Planenspannvorrichtung an der zweiten Behälterseite wenigstens einen nach außen abstehenden Spannhakenabschnitt aufweist, über den hinweg der Wickelkern beim Ausbreiten der Plane bewegbar ist und in den der Wickelkern zum Spannen der Plane nach deren Ausbreiten einhakbar ist, wobei der Wickelkern in seinem im Spannhakenabschnitt eingehakten Zustand drehbar ist, um die Plane ein Stück weit wieder aufzuwickeln und dabei in der Schließstellung zu spannen.

Bei den hier betrachteten Behältern handelt es sich insbesondere um Lastentransportbehälter, insbesondere Kippbrücken oder Kippmulden von Lastentransportfahrzeugen. Derartige Behälter mit Planenabdeckvorrichtungen sind in verschiedenen Ausgestaltungen bekannt. Die Planenabdeckvorrichtungen können z.B. dazu dienen, das im Behälter befindliche Ladegut thermisch zu isolieren, vor Niederschlag zu schützen oder am Herausbewegen aus dem Behälter zu hindern. Unter den bekannten Lastentransportbehältern mit Planenabdeckvorrichtung gibt es solche, bei denen die Plane in Längsrichtung des in Draufsicht üblicherweise rechteckförmigen Lastentransportbehälters ausgerollt bzw. eingerollt werden kann. Andere Ausführungsformen sehen vor, dass die Plane quer zur Längsrichtung des Behälters von einer Behälterlateralseite zur anderen Behälterlateralseite ausgerollt bzw. eingerollt werden kann, um den Behälter abzudecken bzw. wieder zu öffnen.

Aus der US 2004/000798 A1 sind ein Behälter mit einer Planenabdeckvorrichtung sowie eine Planenabdeckvorrichtung bekannt, wobei die Planenabdeckvorrichtung einen Wickelkern und eine darauf wickelbare Plane umfasst, wobei der Wickelkern über einen seitlich vom Behälter abstehenden Spanhakenabschnitt geführt und darin eingehakt und durch ein bewegliches Element ohne Rotationsbeschränkung fixiert werden kann, um anschliessend durch Drehen einer beweglichen Klaue und Eingriff dieser in ein Zahnrad des Wickelkerns Wickelkern auch hinsichtlich der Rotation zu fixieren.

Aus der US 6 478 361 B1 sind ebenfalls eine Planenabdeckvorrichtung gemäß dem Oberbegriff des Anspruchs 1 und ein Behälter mit einer solchen Planenabdeckvorrichtung bekannt.

Die Planenabdeckvorrichtung sollte einen möglichst unkomplizierten Aufbau haben, zuverlässig funktionieren und einfach zu bedienen sein.

Die vorliegende Erfindung löst die Aufgabe, eine Planenabdeckvorrichtung bzw. einen Behälter mit einer solchen Planenabdeckvorrichtung bereitzustellen, welche die vorstehend genannten Ziele erreicht. Ausgehend vom Stand der Technik ist die erfindungsgemäße Planenabdeckvorrichtung dadurch gekennzeichnet, dass das am Behälter zu befestigende Eingriffsmittel zu der Wickelkern-Arretierstellung federnd vor gespannt ist, wobei der Ratschenmechanismus wenigstens einen Zahnkranzabschnitt als wickelkernseitiges Eingriffsmittel der Arretierungsvorrichtung, eine Platte mit einem Lochausschnitt als behälterseitiges Eingriffselement und einen Griff, der zur manuellen Bewegung der Platte in die Wickelkern-Freigabestellung dient, wobei ein unterer Rand des Lochausschnittes der Platte von dem Zahnkranzabschnitt entfernt wird, aufweist.

Der Ratschenmechanismus erleichtert den Spannvorgang der Plane beim Drehen des Wickelkerns, indem er ein Weiterdrehen des Wickelkerns in Drehrichtung zunehmener Planenspannung ermöglicht, jedoch ein unbeabsichtigtes Zurückdrehen des Wickelkerns automatisch durch einen Verriegelungsvorgang der Eingriffsmittel verhindert und ferner mittels des Griffs ein sicheres Lösen der Verriegelung/Arretierung ermöglicht. Die Drehbetätigung des Wickelkerns kann z.B. von Hand mittels einer Kurbel erfolgen. Auch ein motorischer Antrieb ist denkbar. Bei der bevorzugten Ausführungsform mit manueller Kurbelbetätigung des Wickelkerns kann die Kurbel permanent mit dem Wickelkern verbunden sein oder in alternativen Ausführungsformen auch vom Wickelkern trennbar sein.

Gemäß einer Weiterbildung der Erfindung weist die Planenspannvorrichtung eine mit dem Wickelkern lösbar verbindbare Kurbeleinrichtung auf, an welcher das wickelkernseitige Eingriffsmittel der Arretiervorrichtung vorgesehen ist.

Das wickelkernseitige Eingriffsmittel ist erfindungsgemäß ein Zahnkranz oder zumindest ein Zahnkranzabschnitt des Ratschenmechanismus. Dabei kann der Zahnkranz bzw. Zahnkranzabschnitt aus Zähnen gebildet sein, die an ihren in Bezug auf eine bestimmte Drehrichtung des Wickelkerns vorlaufenden Rändern konvex gekrümmt sind, so dass sie eine federnd nachgiebige Riegelkante des behälterseitigen Eingriffsmittels bei Drehung des Wickelkerns in dieser Drehrichtung verdrängen können, ohne in verriegelnden Eingriff mit der Riegelkante zu gelangen, wohingegen die Zähne an ihren in Bezug auf die entgegengesetzte Drehrichtung vorlaufenden Rändern z.B. hakenförmig oder dgl. geformt sind, dass sie mit der Riegelkante des behälterseitigen Eingriffsmittels verriegelnd in Eingriff kommen, ohne sie verdrängen zu können. Das behälterseitige Eingriffsmittel ist hierzu zwischen der Wickelkern-Arretierstellung und der Wickekern-Freigabestellung bewegbar mittels der Kraft einer Feder zu der Wickelkern-Arretierstellung vorgespannt.

Der Spannvorgang der Plane kann folgendermaßen ablaufen: Zunächst wird der Wickelkern über den nach außen abstehenden Spannhakenabschnitt hinweg gerollt. Dabei wird die Plane weitestgehend vom Wickelkern abgewickelt, so dass er außen an der zweiten Behälterseite an der abgewickelten Plane hängt. Ein Weiterdrehen des Wickelkerns führt dann dazu, dass die Plane ein Stück weit wieder aufgewickelt - und der Wickelkern dabei angehoben wird, so dass er den Spannhakenabschnitt von unten beaufschlagt und somit in seinen eingehakten Zustand am Spannhakenabschnitt gelangt. An dieser Stelle sei angemerkt, dass vorzugsweise mehrere Spannhakenabschnitte längs der zweiten Behälterseite verteilt angeordnet sind, die den Wickelkern in dessen Einhakstellung gemeinsam übergreifen.

Das behälterseitige Eingriffsmittel der Arretiervorrichtung ist so an dem Behälter angebracht, dass die Zähne des Zahnkranzes bzw. Zahnkranzabschnittes mit der Riegelkante des behälterseitigen Eingriffsmittels in Berührung kommen, wenn der Wickelkern in seinen eingehakten Zustand gelangt, wobei jedoch die Drehrichtung des Wickelkerns beim Spannen der Plane unverändert so ist, dass die konvex gekrümmten Seiten der Zahnkranzzähne in Drehrichtung vorlaufen und das behälterseitige Eingriffsmittel aus seiner vorgespannten Wickelkern-Arretierstellung verdrängen können. Dabei kann der Wickelkern weitergedreht werden, bis die Plane ausreichend gespannt ist. Kommt es dann zu einer geringen Drehung des Wickelkerns in die entgegengesetzte Drehrichtung, so kommt ein Zahnkranzzahn mit seiner nicht konvex gekrümmten Seite mit der Verriegelungskante des behälterseitigen Eingriffsmittels verriegelnd in Eingriff und die Plane ist in ihrer Schließstellung arretiert und gespannt.

Soll die Plane nun wieder eingerollt werden, so ist dazu das behälterseitige Eingriffsmittel gegen Federkraft in die Wickelkern-Freigabestellung zu bewegen, so dass die Zahnkranzzähne nicht mehr mit der Verriegelungskante in Berührung kommen können, wonach der Wickelkern aus seiner Einhakstellung herausgedreht und schließlich wieder über die Spannhakenabschnitte hinweg zur ersten Behälterseite gerollt werden kann, wobei die Plane dabei auf den Wickelkern aufgewickelt wird. Der Wickelkern mit dem Planenwickel kann dann auf einer Wickelkernstütze an der ersten Behälterseite abgelegt werden.

Bei dem Wickelkern handelt es sich vorzugsweise um eine Hohlstange aus einem Leichtmetall, z.B. Aluminium.

Der Zahnkranzabschnitt der Arretierungsvorrichtung ist vorzugsweise an einem ersten Längsende des Wickelkerns angeordnet. Gemäß einer Ausführungsform der Erfindung ist an dem dem ersten Längsende entgegengesetzten zweiten Längsende des Wickelkerns ein elastisches Seil einer Wickelhilfseinrichtung vorgesehen, welches einerseits in der Nähe der zweiten Behälterseite an dem Behälter fixiert ist und andererseits an einem axialen Überstand des Wickelkerns an dessen zweiten Längsende befestigt ist, so dass es auf den Wickelkern aufgewickelt werden kann, wenn der Wickelkern zum Abwickeln der Plane gedreht wird, wohingegen es vom Wickelkern abgewickelt werden kann, wenn der Wickelkern zum Aufwickeln der Plane gedreht wird, wobei die Wickelhilfseinrichtung ein am oberen Rand des Behälters in gleicher Richtung wie der axiale Überstand des Wickelkerns vom Behälter abstehendes Umlenkelement aufweist, über welches das elastische Seil umlenkend verläuft, wenn der Wickelkern unter Abwicklung des elastischen Seils zur ersten Behälterseite gerollt wird.

Gemäß einer Weiterbildung der Erfindung weist die Plane an ihrem am Wickelkern befestigten Randabschnitt wenigstens einen Ausschnitt auf, welcher ein offenes Fenster für einen Spannhakenabschnitt bildet, wenn der Wickelkern beim Ausbreiten der Plane über den Spannhakenabschnitt hinweg bewegt ist. Dies ermöglicht eine präzise Ineingriffnahme des Wickelkerns durch die betreffenden Spannhakenabschnitte und verhindert, dass die Plane im Bereich der Spannhakenabschnitte beim Spannen stark strapaziert wird.

Die erfindungsgemäße Planenabdeckvorrichtung eignet sich insbesondere für einen Behälter, insbesondere Lastentransportbehälter eines Lastentransportfahrzeugs. Ein solcher Behälter ist erfindungsgemäß bevorzugt entsprechend den Merkmalen nach Anspruch 6 ausgebildet, wobei vorteilhafte Weiterbildungen des erfindungsgemäßen Behälters Gegenstand der Ansprüche 7 bis 12 sind. Die erfindungsgemäße Planenabdeckvorrichtung kann vorzugsweise modular ausgestaltet sein, so dass sie in Erstausrüstung an einem Behälter montiert werden kann oder als Nachrüstsatz für einen Behälter bereitgestellt werden kann, um einen erfindungsgemäßen Behälter auszubilden.

Ein Ausführungsbeispiel der Erfindung wird nachstehend unter Bezugnahme auf die Zeichnungen näher erläutert.
- Figur 1: zeigt in einer perspektivischen Darstellung einen Behälter nach der Erfindung, der als Halfpipe-Kippmulde für ein Lastentransportfahrzeug ausgebildet ist und eine Planenabdeckvorrichtung nach der Erfindung aufweist, die im geöffneten Zustand dargestellt ist.
- Figur 2: zeigt den Behälter aus Figur 1 mit geschlossener Planenabdeckvorrichtung in perspektivischer Darstellung.
- Figur 3: zeigt in einer perspektivischen Ausschnittsdarstellung einen Beschlag am vorderen und oberen Ende des Behälters auf dessen zweiter Behälterseite mit der in Figur 1 bei III angedeuteten Blickrichtung, wobei der Beschlag einen Spannhakenabschnitt aufweist und als Haltemittel für ein behälterseitiges Eingriffsmittel der Arretiervorrichtung dient.
- Figur 4: zeigt in einer der Figur 3 ähnlichen Ansicht den genannten Beschlag, wobei in Figur 4 der Wickelkern über den Spannhakenabschnitt hinweg bewegt ist.
- Figur 5: zeigt in einer perspektivischen Ausschnittsdarstellung mit Blick auf die Behältervorderseite eine Situation, in der die Plane der Planenabdeckvorrichtung mittels der Planenspannvorrichtung in Schließstellung gespannt wird.
- Figur 6: zeigt in einer perspektivischen Detail-Ausschnittsdarstellung mit der in Figur 5 bei VI angedeuteten Blickrichtung einen Bereich der Arretiervorrichtung mit arretiertem Wickelkern.
- Figur 7: zeigt einen Beschlag, wie er auch in Figur 3 und Figur 4 dargestellt ist und zur Bereitstellung eines weiteren Spannhakenabschnitts am oberen Rand der zweiten Behälterseite vorgesehen sein kann.
- Figur 8: zeigt einen Beschlag gemäß Figur 7 am oberen Rand der zweiten Behälterseite mit darüber hinwegbewegtem Wickelkern in Seitenansicht, wobei die Plane einen Fensterausschnitt für den Spannhakenabschnitt aufweist.
- Figur 9: zeigt in einer perspektivischen Darstellung eine Kurbel zum Drehen des Wickelkerns, wobei an der Kurbel als wickelkernseitiges Eingriffsmittel ein Zahnkranzabschnitt der Planenspannvorrichtung vorgesehen ist.
- Figur 10: zeigt in einer Ausschnitts-Seitenansicht den oberen Heckbereich des Behälters mit einem Beschlag, welcher einen Spannhakenabschnitt und ein Umlenkelement für ein elastisches Seil einer Wickelhilfevorrichtung aufweist.
- Figur 11: zeigt den Beschlag aus Figur 10 isoliert und in perspektivischer Darstellung.

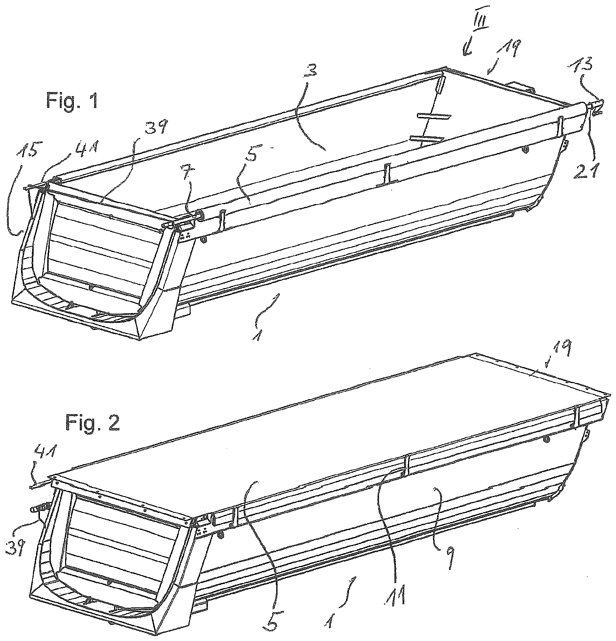

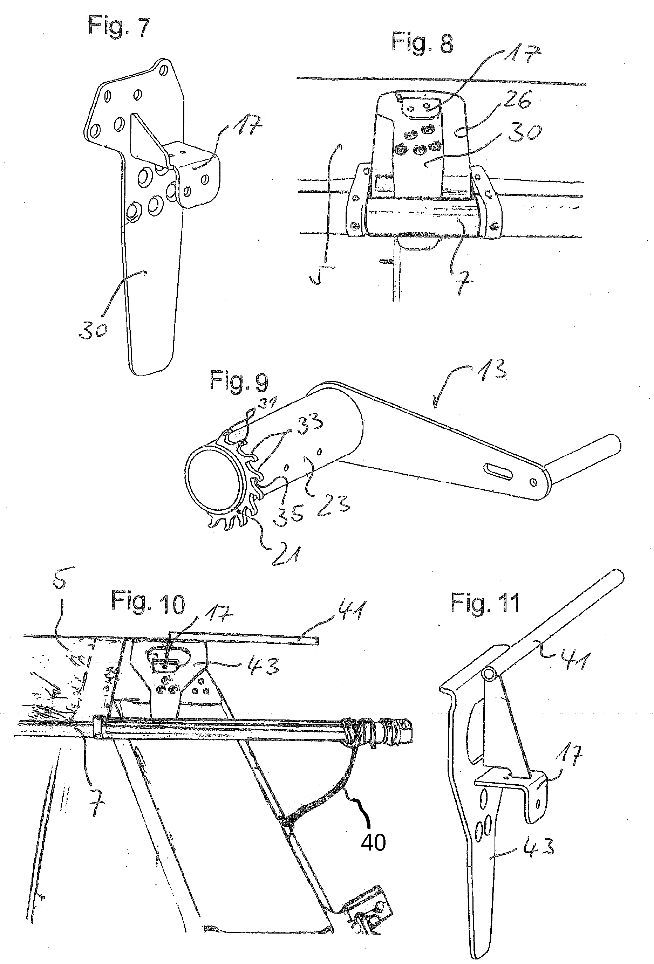

Der Behälter 1 in Figur 1 hat eine obere Beladeöffnung 3, die in Figur 1 freiliegt und mittels einer Planenabdeckvorrichtung abdeckbar ist, wie dies in Figur 2 gezeigt ist. Die Planenabdeckvorrichtung weist eine Plane 5 im Wesentlichen rechteckigen Zuschnitts in Anpassung an die abzudeckende obere Beladeöffnung 3 auf. In Figur 1 ist die Plane 5 im Wesentlichen vollständig auf einen Wickelkern 7 der Planenabdeckvorrichtung aufgewickelt und befindet sich am oberen Ende einer ersten Seite 9 des Behälters 1. Der Wickelkern 7 mit der darauf aufgewickelten Plane 5 stützen sich an Abstützelementen 11 ab und sind somit am Behälter 1 gesichert. Die Plane 5 ist einerseits oben an der ersten Seite 9 des Behälters - und andererseits an dem Wickelkern 7 fixiert. Die Planenfixierung an dem Wickelkern 7 ist so ausgeführt, dass der Wickelkern bei seiner Drehung ohne wesentlichen Schlupf die Plane wickelt. Zum Drehen des Wickelkerns 7 ist eine Kurbel 13 vorgesehen, die lösbar auf das axial vordere Ende des Wickelkerns aufsteckbar ist und im aufgesteckten Zustand drehfest mit dem Wickelkern 7 verbunden ist. Die Kurbel 13 ist in Figur 9 isoliert dargestellt.

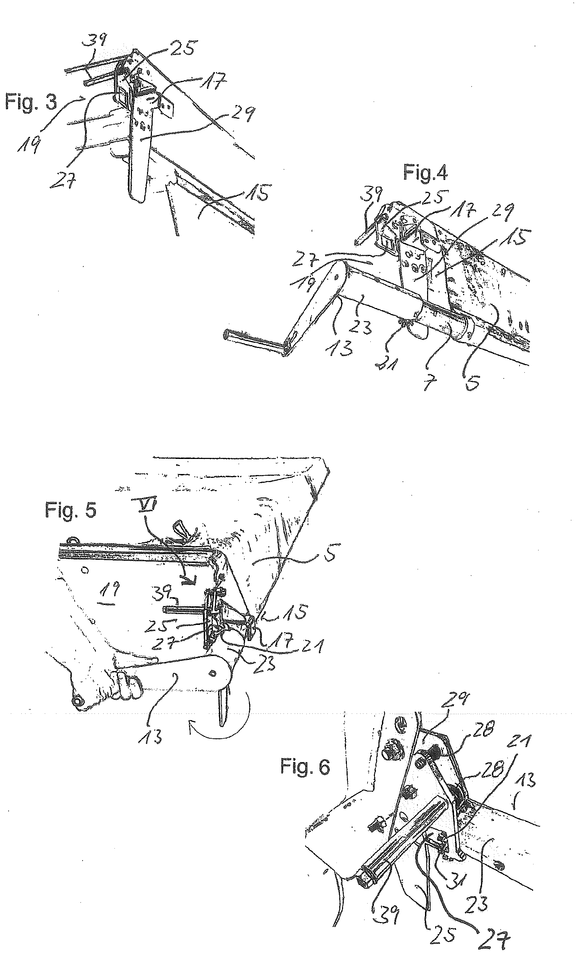

Soll der Behälter aus der Situation gemäß Figur 1 heraus an seiner oberen Beladeöffnung 3 geschlossen, also in die in Figur 2 gezeigte Situation überführt werden, so ist die Plane 5 durch Drehen des Wickelkerns 7 mittels der Kurbel 13 abzuwickeln, wobei der Wickelkern oben am Behälter 1 abrollt, über den oberen Rand der zweiten Behälterseite 15 hinweg gelangt und schließlich an der zweiten Behälterseite 15 hängend in eine Endstellung kommt, in der die Plane 5 soweit wie möglich vom Wickelkern 7 abgewickelt ist. Diese Situation ist in Figur 4 illustriert. Der Wickelkern 7 ist dabei über Spannhakenabschnitte 17 hinweg bewegt worden, die am oberen Rand der zweiten Behälterseite 15 vom Behälter nach außen abstehen. Figur 3 zeigt den Spannhakenabschnitt 17 am vorderen und oberen Behälterrand der zweiten Behälterseite 15 bei davon entfernter Plane 5.

Im Beispielsfall wurde der Wickelkern 7 zum Abwickeln der Plane 5 mittels der Kurbel 13 im Uhrzeigersinn gedreht (von der Vorderseite 19 des Behälters 1 aus gesehen), bis er in die in Figur 4 gezeigte Lage an der zweiten Behälterseite 15 hängend gekommen ist, dabei ist die Plane 5 bis auf eine Halteschlaufe vom Wickelkern 7 abgewickelt worden. Wird der Wickelkern ausgehend von der Situation gemäß Figur 4 weiter im Uhrzeigersinn mittels der Kurbel 13 gedreht, so wickelt er die Plane 5 wieder ein Stück weit auf und gelangt dabei nach oben unter den Spannhakenabschnitt 17 und kommt mit diesem einhakend in Berührung. Ein Weiterdrehen des Wickelkerns 7 im Uhrzeigersinn führt dann dazu, dass die Plane 5 gespannt wird (vgl. Figur 5). Dabei kommt ein Ratschenmechanismus nach der Erfindung zur Wirkung, der einen Zahnkranzabschnitt 21 am Umfang des auf dem Wickelkern 7 koaxial aufsitzenden bzw. aufzusetzenden Abschnitt 23 der Kurbel 13 als wickelkernseitiges Eingriffselement und eine Platte 25 mit einem Lochausschnitt 27 als behälterseitiges Eingriffselement aufweist. Die Platte 25 ist mittels Federn 28 an dem Beschlag 29 befestigt, welcher auch den Spannhakenabschnitt 17 aufweist und mit dem Behälter verschraubt ist. Die Platte 25 ist zwischen einer Wickelkern-Arretierstellung und einer Wickelkern-Freigabestellung bewegbar an dem Beschlag 29 befestigt und zu der Wickelkern-Arretierstellung federnd vorgespannt.

Aus Figur 5 und Figur 6 ist zu ersehen, dass der Zahnkranzabschnitt 21 der Arretiervorrichtung mit wenigstens einem Zahn in den Lochausschnitt 27 der Platte 25 eingreifen kann, wenn der Wickelkern am Spannhakenabschnitt 17 eingehakt ist und die Platte 25 in ihrer Wickelkern-Arretierstellung ist. Die Zähne 31 des Zahnkranzabschnittes 21 sind so geformt, dass sie an ihren bei Drehung des Wickelkerns im Uhrzeigersinn gemäß Figur 5 vorlaufenden Seiten 33 konvex gerundet sind, so dass sie bei der Drehung im Uhrzeigersinn die Platte 25 jeweils aus der Wickelkern-Arretierstellung verdrängen können und es dabei nicht zu einem Verriegeln der Arretiervorrichtung kommt. Die Plane 5 kann so bequem gespannt werden. Wird dann unter Planenspannung der Wickelkern 7 freigegeben, so dass er ein wenig entgegengesetzt dem Uhrzeigersinn zurückdrehen kann, so gelangt ein Zahn 31 des Zahnkranzabschnittes 25 bei seiner Verdrehung entgegengesetzt dem Uhrzeigersinn (bezogen auf Figur 5) mit seiner eher hakenförmig gestalteten, dann vorlaufenden Seite 35 an den unteren Rand 37 des Lochausschnittes 27, der dann für diesen Zahn eine Verriegelungskante bildet und damit verriegelnd in Eingriff kommt (vgl. Figur 6). Der Wickelkern 7 wird somit arretiert und die Plane 5 bleibt in ihrer Schließstellung gespannt.

Zum Öffnen des Verdecks ist die Verriegelung zwischen dem Zahnkranzabschnitt 21 und der Platte 25 zu lösen, indem die Platte 25 aus ihrer Wickelkern-Arretierstellung gemäß Figur 6 in die Wickelkern-Freigabestellung bewegt wird, in der der untere Rand 37 des Lochausschnittes 27 der Platte 25 von dem Zahnkranzabschnitt 21 entfernt wird. Ein Griff 39 dient zur manuellen Bewegung der Platte 25 in die Wickelkern-Freigabestellung. Der Wickelkern kann dann entgegen dem Uhrzeigersinn (bezogen auf Figur 5) gedreht werden, um die Plane aufzuwickeln und zur ersten Behälterseite in die Öffnungsstellung gemäß Figur 2 zu gelangen.

Der Ratschenmechanismus aus federnd nachgiebig verdrängbarer Platte 25 mit Lochaussparung 27 und Zahnkranzabschnitt 21 am Wickelkern 7 bzw. der Kurbel 13 ist sehr einfach aufgebaut und funktioniert sehr zuverlässig und ist ferner sehr einfach zu bedienen, um die Plane zu spannen bzw. wieder aus ihrer Schließstellung zu lösen.

Figur 10 zeigt eine Ausschnittsdarstellung am hinteren oberen Ende der zweiten Behälterseite. Daraus ist zu ersehen, dass der Wickelkern 7 am hinteren Ende verlängert ist und dass auf dem verlängerten Ende ein elastisches Seil 40 gewickelt ist, wenn die Plane 5 vom Wickelkern 7 abgewickelt ist. Das elastische Seil 40 ist einerseits in der Nähe der zweiten Behälterseite 15 an dem Behälter 1 fixiert und andererseits an dem axialen Überstand des Wickelkerns 7 befestigt. Wird die Plane 5 aus der in Figur 10 gezeigten Schließstellung wieder auf den Wickelkern aufgerollt, kommt es zum Abrollen der elastischen Leine 40 von dem axialen Überstand des Wickelkerns, wobei sich die elastische Leine 40 über ein stabförmiges Umlenkelement 41 legt und gespannt wird, bis schließlich der in Figur 1 erkennbare Zustand erreicht ist. Die elastische Leine 40 und das Umlenkelement 41 sind Bestandteile einer Wickelhilfseinrichtung.

Das Umlenkelement 41 ist gemäß Figur 10 und Figur 11 Bestandteil eines Beschlags 43, der auch einen Spannhakenabschnitt 17 aufweist. Die Beschläge 29, 30 und 43 sind Bestandteile des Modulsystems der Planenspannvorrichtung.

## Patentansprüche

1. Planenabdeckvorrichtung für einen Behälter (1) mit oberer Beladeöffnung (3), vorzugsweise ein Lastentransportbehälter, insbesondere eine Kippbrücke, eines Lastentransportfahrzeugs, wobei die Planenabdeckvorrichtung eine Plane (5), einen länglichen Wickelkern (7) und eine Planenspannvorrichtung (7, 17, 21, 25) aufweist, wobei die Plane (5) einerseits an einer ersten Seite (9) des Behälters zu befestigen ist und andererseits an dem Wickelkern (7) fixiert ist oder zu fixieren ist, so dass sie auf den Wickelkern (7) aufwickelbar und von dem Wickelkern (7) abwickelbar ist, um im bestimmungsgemäß montierten Zustand an dem Behälter (1) die Beladeöffnung (3) freizugeben bzw. abzudecken, wobei die Spannvorrichtung wenigstens einen Spannhakenabschnitt (17) aufweist, der an einer der ersten Seite (9) des Behälters entgegengesetzten zweiten Seite (15) des Behälters zu montieren ist, so dass die Plane (5) beim Abwickeln vom Wickelkern (7) über den Spannhakenabschnitt (17) hinweg bewegbar und der Wickelkern (7) darin einhakbar sowie in dem darin eingehakten Zustand weiter drehbar ist, um die Plane (5) ein Stück weit wieder aufzuwickeln und dabei zu spannen, wobei die Planenspannvorrichtung (7, 17, 21, 25) einen Ratschenmechanismus (21, 25, 28) mit einer Arretierungsvorrichtung (21, 25) zum Arretieren des Wickelkerns (7) in einer die Plane (5) spannenden Wickelkerndrehstellung aufweist und die Arretierungsvorrichtung wenigstens zwei zum Arretieren des Wickelkerns (7) miteinander verriegelnd in Eingriff zu bringende Eingriffsmittel (21, 25) aufweist, von denen eines am Wickelkern (7) - oder an einem mit dem Wickelkern zur gemeinsamen Drehung verbundenen oder zu verbindenden Element (13) vorgesehen - und das andere am Behälter zu befestigen ist, wobei der Spannhakenabschnitt (17) an der zweiten Seite (15) des Behälters von diesem nach außen abstehend zu montieren ist und wobei das am Behälter zu befestigende Eingriffsmittel (25) der Arretierungsvorrichtung an einem Haltemittel (29) zwischen einer Wickelkern-Arretierstellung und einer Wickelkern-Freigabestellung bewegbar befestigt ist,
**dadurch gekennzeichnet, dass**
das am Behälter zu befestigende Eingriffsmittel (25) zu der Wickelkern-Arretierstellung federnd vor gespannt ist, wobei der Ratschenmechanismus wenigstens einen Zahnkranzabschnitt (21) als wickelkernseitiges Eingriffsmittel der Arretierungsvorrichtung, eine Platte (25) mit einem Lochausschnitt (27) als behälterseitiges Eingriffselement und einen Griff (39), der zur manuellen Bewegung der Platte (25) in die Wickelkern-Freigabestellung dient, wobei ein unterer Rand (37) des Lochausschnittes (27) der Platte (25) von dem Zahnkranzabschnitt (21) entfernt wird, aufweist.

2. Planenabdeckvorrichtung nach Anspruch 1, wobei der Wickelkern (7) eine längliche Stange, vorzugsweise in Rohrform ist.

3. Planenabdeckvorrichtung nach einem der Ansprüche 1 oder 2, wobei die Planenspannvorrichtung (7, 17, 21, 25) eine mit dem Wickelkern (7) zur gemeinsamen Drehung damit lösbar verbindbare Kurbeleinrichtung (13) aufweist, wobei das wickelkernseitige Eingriffsmittel (21) der Arretierungsvorrichtung an der Kurbeleinrichtung (13) vorgesehen ist.

4. Planenabdeckvorrichtung nach einem der Ansprüche 1 - 3, wobei die Plane (5) an ihrem am Wickelkern (7) befestigten Randabschnitt einen Ausschnitt (26) aufweist, welcher ein offenes Fenster für einen Spannhakenabschnitt (17) bildet, wenn der Wickelkern (7) beim Ausbreiten der Plane (5) über den Spannhakenabschnitt (17) hinweg bewegt ist.

5. Planenabdeckvorrichtung nach den Ansprüchen 1 - 4, wobei sie an dem Behälter vorzugsweise durch Schrauben anbringbare Beschläge (29, 30, 43) umfasst, von denen ein Beschlag einen Spannhakenabschnitt (17) - ein weiterer Beschlag einen Spannhakenabschnitt (17) und das Haltemittel des am Behälter zu befestigenden Eingriffsmittels (25) - und ein weiterer Beschlag einen Spannhakenabschnitt (17) und ein Umlenkelement (41) für ein elastisches Seil (39) einer Wickelhilfevorrichtung aufweist.

6. Behälter mit einer oberen Beladeöffnung (3) und einer Planenabdeckvorrichtung nach einem der vorhergehenden Ansprüche, wobei die Plane (5):
- einerseits an einer ersten Seite (9) des Behälters - und andererseits an dem Wickelkern (7) fixiert ist,
- in einer die Beladeöffnung (3) freigebenden Öffnungsstellung als Wickel auf dem Wickelkern (7) aufgewickelt an der ersten Seite (9) des Behälters gelagert ist,
- durch Rollen des Wickelkerns (7) von der ersten Behälterseite (9) zu einer der ersten Behälterseite gegenüberliegenden zweiten Behälterseite (15) von dem Wickelkern (7) abwickelbar und dabei über die Beladeöffnung (3) ausbreitbar ist und
- mittels der Planenspannvorrichtung (7, 17, 21, 25) in einer die Beladeöffnung (3) abdeckenden Schließstellung spannbar ist,
wobei der wenigstens einen Spannhakenabschnitt (17) der Planenspannvorrichtung (7, 17, 21, 25) an der zweiten Behälterseite (15) nach außen abstehend angeordnet ist, über den hinweg der Wickelkern (7) beim Ausbreiten der Plane (5) bewegbar ist und in den der Wickelkern (7) zum Spannen der Plane (5) nach deren Ausbreiten einhakbar ist, wobei der Wickelkern (7) in seinem im Spannhakenabschnitt (17) eingehakten Zustand drehbar ist, um die Plane (5) ein Stück weit wieder aufzuwickeln und dabei in der Schließstellung zu spannen, wobei eines (21) von den wenigstens zwei zum Arretieren des Wickelkerns (7) miteinander verriegelnd in Eingriff bringbaren Eingriffsmittel am Wickelkern - oder an einem mit dem Wickelkern zur gemeinsamen Drehung verbundenen Element (13) - und das andere am Behälter befestigt ist, wobei das behälterseitige Eingriffsmittel (25) zwischen der Wickelkern-Arretierstellung und der Wickelkern-Freigabestellung bewegbar an dem Haltemittel (29) befestigt und zu der Wickelkern-Arretierstellung federnd vorgespannt ist.

7. Behälter nach Anspruch 6, wobei er ein Lastentransportbehälter, insbesondere eine Kippbrücke, eines Lastentransportfahrzeugs ist.

8. Behälter nach Anspruch 6 oder 7 in ihren Rückbezügen auf Anspruch 2, wobei der Wickelkern (7) sich entlang der ersten Behälterseite (9) und der zweiten Behälterseite (15) erstrecket.

9. Behälter nach einem der vorhergehenden Ansprüche 6 bis 8, wobei die Arretierungsvorrichtung an einem ersten Längsende des Wickelkerns (7) angeordnet ist.

10. Behälter nach Anspruch 9, wobei an dem dem ersten Längsende entgegengesetzten zweiten Längsende des Wickelkerns eine Wickelhilfseinrichtung vorgesehen ist, die ein spannbares elastisches Seil (39) umfasst, welches einerseits in der Nähe der zweiten Behälterseite (15) an dem Behälter fixiert ist und andererseits an einem axialen Überstand des Wickelkerns (7) an dessen zweiten Längsende befestigt ist, so dass es auf den Wickelkern (7) aufgewickelt werden kann wenn der Wickelkern zum Abwickeln der Plane (5) gedreht wird, wohingegen es vom Wickelkern (7) abgewickelt werden kann, wenn der Wickelkern zum Aufwickeln der Plane (5) gedreht wird, wobei die Wickelhilfseinrichtung ein am oberen Rand des Behälters in gleicher Richtung wie der axiale Überstand des Wickelkerns vom Behälter abstehendes Umlenkelement (41) aufweist, über welches das elastische Seil (39) umlenkend verläuft, wenn der Wickelkern unter Abwicklung des elastischen Seils zur ersten Behälterseite (9) gerollt wird.

11. Behälter nach einem der vorhergehenden Ansprüche 6 bis 10, wobei das behälterseitige Eingriffsmittel (25) mittels Federkraft wenigstens einer Feder (28) zu der Wickelkern-Arretierstellung vorgespannt ist.

12. Behälter nach einem der vorhergehenden Ansprüche 6 bis 11, wobei die Plane (5) an ihrem am Wickelkern (7) befestigten Randabschnitt einen Ausschnitt (26) aufweist, welcher ein offenes Fenster für den Spannhakenabschnitt (17) bildet, wenn der Wickelkern (7) beim Ausbreiten der Plane (5) über den Spannhakenabschnitt (17) hinweg bewegt ist.

## Claims

1. Tarpaulin covering device for a container (1) with an upper loading opening (3), preferably a freight transport container, in particular a dump body, of a freight transport vehicle, the tarpaulin covering device having a tarpaulin (5), an elongated winding core (7) and a tarpaulin tensioning device (7, 17, 21, 25), wherein the tarpaulin (5) is fastened or is to be fastened on the one hand to a first side (9) of the container and on the other hand to the winding core (7), so that it can be wound onto the winding core (7) and unwound from the winding core (7) in order to expose or cover the loading opening (3) when mounted as intended on the container (1), the tensioning device having at least one tensioning hook section (17) to be mounted on a second side (15) of the container opposite to the first side (9) of the container, so that the tarpaulin (5) can be moved over the tension hook section (17) when unwinding the winding core (7) and the winding core (7) can be hooked therein and further rotated in the hooked-in state in order to rewind the tarpaulin (5) a little way and thereby tension it, the tarpaulin tensioning device (7, 17, 21, 25) comprising a ratchet mechanism (21, 25, 28) with a locking device (21, 25) for locking the winding core (7) in a winding core rotating position in which the tarpaulin (5) is tensioned, and the locking device having at least two engagement means (21, 25) which are to be interlocked and engaged with one another in order to lock the winding core (7), of which one is provided on the winding core (7) - or on an element (13) connected or to be connected to the winding core so that they rotate together - and the other is to be fastened to the container, wherein the tension hook section (17) is to be mounted on the second side (15) of the container so as to project outwards therefrom, and wherein the engagement means (25) of the locking device to be fastened to the container is movably secured to a retaining means (29) between a winding core locking position and a winding core release position,
**characterised in that**
the engagement means (25) to be secured to the container is resiliently biased to the winding core locking position, the ratchet mechanism having at least one sprocket section (21) as the engagement means of the locking device on the winding core side, a plate (25) with a hole cutout (27) as the engagement element on the container side, and a handle (39) for manually moving the plate (25) into the winding core release position, wherein a lower edge (37) of the hole cutout (27) of the plate (25) is removed from the sprocket section (21).

2. Tarpaulin covering device according to claim 1, wherein the winding core (7) is an elongated rod, preferably in tubular form.

3. Tarpaulin covering device according to one of claims 1 or 2, wherein the tarpaulin tensioning device (7, 17, 21, 25) has a crank device (13) which can be detachably connected to the winding core (7) so that they can be rotated together, wherein the engagement means (21) of the locking device on the winding core side is provided on the crank device (13).

4. Tarpaulin covering device according to one of claims 1 to 3, wherein the tarpaulin (5) has at its edge portion attached to the winding core (7) a cutout (26) which forms an open window for a tension hook section (17) when the winding core (7) is moved over the tension hook section (17) upon spreading out the tarpaulin (5).

5. Tarpaulin covering device according to claims 1 to 4, comprising fittings (29, 30, 43) which can preferably be attached to the container by screws, of which one fitting has a tension hook section (17), another fitting has a tension hook section (17) and the retaining means of the engagement means (25) to be fastened to the container, and another fitting has a tension hook section (17) and a deflecting element (41) for an elastic rope (39) of a winding aid device.

6. Container having an upper loading opening (3) and a tarpaulin covering device according to one of the preceding claims, wherein the tarpaulin (5):
- is fixed on the one hand to a first side (9) of the container and on the other hand to the winding core (7),
- in an opening position exposing the loading opening (3) is stored as a roll wound up on the winding core (7) on the first side (9) of the container,
- by rolling the winding core (7) from the first container side (9) to a second container side (15) lying opposite the first container side, can be unwound from the winding core (7) and thereby spread over the loading opening (3), and
- can be tensioned by means of the tarpaulin tensioning device (7, 17, 21, 25) in a closed position covering the loading opening (3),
wherein at least one tension hook section (17) of the tarpaulin tensioning device (7, 17, 21, 25) is arranged on the second container side (15) so as to project outwards, over which the winding core (7) is movable when spreading the tarpaulin (5) and into which the winding core (7) can be hooked for tensioning the tarpaulin (5) after spreading, the winding core (7) being rotatable when hooked into the tensioning hook section (17) in order to rewind the tarpaulin (5) a little way and thereby tension it in the closed position, wherein one (21) of the at least two engagement means which can be engaged with one another so as to lock the winding core (7) is fastened to the winding core - or to an element (13) connected to the winding core so that they can be rotated together - and the other is fastened to the container, wherein the container-side engagement means (25) is movably fastened to the holding means (29) between the winding core locking position and the winding core release position and is resiliently biased towards the winding core locking position.

7. Container according to claim 6, being a freight transport container, in particular a dump body, of a freight transport vehicle.

8. Container according to claim 6 or 7 in their back-references to claim 2, wherein the winding core (7) extends along the first container side (9) and the second container side (15).

9. Container according to one of the preceding claims 6 to 8, wherein the locking device is arranged at a first longitudinal end of the winding core (7).

10. Container according to claim 9, wherein a winding aid device is provided at the second longitudinal end of the winding core opposite the first longitudinal end, which winding aid device comprises a tensionable elastic rope (39) which on the one hand is fixed to the container near the second container side (15) and on the other hand is fixed to an axial projection of the winding core (7) at its second longitudinal end so that it can be wound onto the winding core (7) when the winding core is rotated to unwind the tarpaulin (5), whereas it can be unwound from the winding core (7) when the winding core is rotated to wind up the tarpaulin (5), the winding aid device having a deflecting element (41) projecting from the container at the upper edge of the container in the same direction as the axial projection of the winding core, over which deflecting element the elastic rope (39) extends when the winding core is rolled to the first container side (9) whilst unwinding the elastic rope.

11. Container according to one of the preceding claims 6 to 10, wherein the container-side engagement means (25) is pre-tensioned by means of spring force of at least one spring (28) to the winding core locking position.

12. Container according to one of the preceding claims 6 to 11, wherein the tarpaulin (5) has at its edge portion attached to the winding core (7) a cutout (26) which forms an open window for the tension hook section (17) when the winding core (7) is moved over the tension hook section (17) upon spreading out the tarpaulin (5).

## Revendications

1. Dispositif de recouvrement à bâche pour un contenant (1) avec une ouverture de chargement supérieure (3), de préférence un contenant de transport de charges, en particulier un pont basculant, d'un véhicule de transport de charges, dans lequel le dispositif de recouvrement à bâche présente une bâche (5), une partie centrale d'enroulement (7) allongée et un dispositif de tension de bâche (7, 17, 21, 25), dans lequel la bâche (5) doit être fixée d'une part au niveau d'un premier côté (9) du contenant et est bloquée ou doit être bloquée d'autre part au niveau de la partie centrale d'enroulement (7) de sorte qu'elle peut être enroulée sur la partie centrale d'enroulement (7) et peut être déroulée de la partie centrale d'enroulement (7) pour libérer ou recouvrir l'ouverture de chargement (3) dans l'état monté conforme à l'usage prévu au niveau du contenant (1), dans lequel le dispositif de tension présente au moins une section de crochet de tension (17), qui doit être montée au niveau d'un deuxième côté (15), opposé au premier côté (9) du contenant, du contenant de sorte que la bâche (5) peut être déplacée lors du déroulement de la partie centrale d'enroulement (7) au-delà de la section de crochet de tension (17) et la partie centrale d'enroulement (7) peut y être accrochée et peut être tournée dans l'état accroché dans celle-ci pour enrouler un peu plus la bâche (5) et ainsi la tendre, dans lequel le dispositif de tension de bâche (7, 17, 21, 25) présente un mécanisme à cliquet (21, 25, 28) avec un dispositif d'arrêt (21, 25) servant à arrêter la partie centrale d'enroulement (7) dans une position de rotation de partie centrale d'enroulement tendant la bâche (5) et le dispositif d'arrêt présente au moins deux moyens de prise (21, 25) à amener en prise par verrouillage l'un avec l'autre pour arrêter la partie centrale d'enroulement (7), dont l'un est prévu au niveau de la partie centrale d'enroulement (7) - ou au niveau d'un élément (13) relié ou à relier à la partie centrale d'enroulement aux fins de la rotation conjointe - et l'autre est à fixer au niveau du contenant, dans lequel la section de crochet de tension (17) est à monter au niveau du deuxième côté (15) du contenant de manière à dépasser de celui-ci vers l'extérieur et dans lequel le moyen de prise (25), à fixer au niveau du contenant, du dispositif d'arrêt est fixé au niveau d'un moyen de maintien (29) entre une position d'arrêt de partie centrale d'enroulement et une position de libération de partie centrale d'enroulement,
**caractérisé en ce que**
le moyen de prise (25) à fixer au niveau du contenant est précontraint par ressorts vers la position d'arrêt de partie centrale d'enroulement, dans lequel le mécanisme à cliquet présente au moins une section à couronne dentée (21) en tant que moyen de prise du dispositif d'arrêt du côté de la partie centrale d'enroulement, une plaque (25) avec une partie perforée (27) en tant qu'élément de prise côté contenant et une poignée (39), qui sert à déplacer manuellement la plaque (25) dans la position de libération de partie centrale d'enroulement, dans lequel un bord inférieur (37) de la partie perforée (27) de la plaque (25) est retiré de la section à couronne dentée (21).

2. Dispositif de recouvrement à bâche selon la revendication 1, dans lequel la partie centrale d'enroulement (7) est une tige allongée, de préférence sous une forme tubulaire.

3. Dispositif de recouvrement à bâche selon l'une quelconque des revendications 1 ou 2, dans lequel le dispositif de tension de bâche (7, 17, 21, 25) présente un système à manivelle (13) pouvant être relié de manière amovible à la partie centrale d'enroulement (7) aux fins de la rotation conjointe, dans lequel le moyen de prise (21) du dispositif d'arrêt côté partie centrale d'enroulement est prévu au niveau du système à manivelle (13).

4. Dispositif de recouvrement à bâche selon l'une quelconque des revendications 1 à 3, dans lequel la bâche (5) présente au niveau de sa section de bord fixée au niveau de la partie centrale d'enroulement (7) une partie (26), laquelle forme une fenêtre ouverte pour une section de crochet de tension (17) quand la partie centrale d'enroulement (7) est déplacée lors du déploiement de la bâche (5) au-delà de la section de crochet de tension (17).

5. Dispositif de recouvrement à bâche selon les revendications 1 à 4, dans lequel il comprend des ferrures (29, 30, 43) pouvant être installées au niveau du contenant de préférence par vissage, dont une ferrure présente une section de crochet de tension (17), - une autre ferrure présente une section de crochet de tension (17) et le moyen de maintien du moyen de prise (25) à fixer au niveau du contenant et - une autre ferrure présente une section de crochet de tension (17) et un élément de renvoi (41) pour une corde (39) élastique d'un dispositif d'aide à l'enroulement.

6. Contenant avec une ouverture de chargement supérieure (3) et un dispositif de recouvrement à bâche selon l'une quelconque des revendications précédentes, dans lequel la bâche (5) :
- est bloquée d'une part au niveau d'un premier côté (9) du contenant - et d'autre part au niveau de la partie centrale d'enroulement (7),
- est supportée au niveau du premier côté (9) du contenant en étant enroulée sur la partie centrale d'enroulement (7) dans une position d'ouverture libérant l'ouverture de chargement (3) en tant que bobine,
- peut être déroulée de la partie centrale d'enroulement (7) par roulement de la partie centrale d'enroulement (7) depuis le premier côté de contenant (9) vers un deuxième côté de contenant (15) faisant face au premier côté de contenant et peut être déployée ce faisant par-dessus l'ouverture de chargement (3), et
- peut être tendue dans une position de fermeture recouvrant l'ouverture de chargement (3) au moyen du dispositif de tension de bâche (7, 17, 21, 25),
dans lequel l'au moins une section de crochet de tension (17) du dispositif de tension de bâche (7, 17, 21, 25) est disposée en dépassant vers l'extérieur au niveau du deuxième côté de contenant (15), au-delà de laquelle la partie centrale d'enroulement (7) peut être déplacée lors du déploiement de la bâche (5) et dans laquelle la partie centrale d'enroulement (7) peut être accrochée pour tendre la bâche (5) après son déploiement, dans lequel la partie centrale d'enroulement (7) peut tourner dans son état accroché dans la section de crochet de tension (17) pour enrouler un peu plus la bâche (5) et la tendre ce faisant dans la position de fermeture, dans lequel un (21) des au moins deux moyens de prise pouvant être amenés en prise par verrouillage l'un avec l'autre pour arrêter la partie centrale d'enroulement (7) est fixé au niveau de la partie centrale d'enroulement - ou au niveau d'un élément (13) relié à la partie centrale d'enroulement aux fins de la rotation conjointe - et l'autre est fixé au niveau du contenant, dans lequel le moyen de prise (25) côté contenant est fixé au niveau du moyen de maintien (29) de manière à pouvoir être déplacé entre la position d'arrêt de partie centrale d'enroulement et la position de libération de partie centrale d'enroulement et est précontraint par ressorts vers la position d'arrêt de partie centrale d'enroulement.

7. Contenant selon la revendication 6, dans lequel il est un contenant de transport de charges, en particulier un pont basculant, d'un véhicule de transport de charges.

8. Contenant selon la revendication 6 ou 7 en lien avec la revendication 2, dans lequel la partie centrale d'enroulement (7) s'étend le long du premier côté de contenant (9) et du deuxième côté de contenant (15).

9. Contenant selon l'une quelconque des revendications 6 à 8, dans lequel le dispositif d'arrêt est disposé au niveau d'une première extrémité longitudinale de la partie centrale d'enroulement (7).

10. Contenant selon la revendication 9, dans lequel est prévu, au niveau de la seconde extrémité longitudinale, opposée à la première extrémité longitudinale, de la partie centrale d'enroulement, un système d'aide à l'enroulement, qui comprend une corde (39) élastique pouvant être tendue, laquelle est bloquée d'une part à proximité du deuxième côté de contenant (15) au niveau du contenant et est fixée d'autre part au niveau d'un débord axial de la partie centrale d'enroulement (7) au niveau de sa seconde extrémité longitudinale de sorte qu'elle peut être enroulée sur la partie centrale d'enroulement (7) quand la partie centrale d'enroulement est tournée pour dérouler la bâche (5) tandis qu'elle peut être déroulée de la partie centrale d'enroulement (7) quand la partie centrale d'enroulement est tournée pour enrouler la bâche (5), dans lequel le système d'aide à l'enroulement présente un élément de renvoi (41) dépassant du contenant au niveau du bord supérieur du contenant dans une direction identique à celle du débord axial de la partie centrale d'enroulement, par l'intermédiaire duquel la corde (39) élastique s'étend avec une action de renvoi quand la partie centrale d'enroulement est roulée moyennant un déroulement de la corde élastique vers le premier côté de contenant (9).

11. Contenant selon l'une quelconque des revendications 6 à 10, dans lequel le moyen de prise (25) côté contenant est précontraint au moyen d'une force de ressort d'au moins un ressort (28) vers la position d'arrêt de partie centrale d'enroulement.

12. Contenant selon l'une quelconque des revendications précédentes 6 à 11, dans lequel la bâche (5) présente au niveau de sa section de bord fixée au niveau de la partie centrale d'enroulement (7) une partie (26), laquelle forme une fenêtre ouverte pour la section de crochet de tension (17) quand la partie centrale d'enroulement (7) est déplacée lors du déploiement de la bâche (5) au-delà de la section de crochet de tension (17).
